# EUROPEAN PATENT SPECIFICATION

(11) **EP 2 835 199 B1**
(45) Date of publication and mention of the grant of the patent: **04.05.2016**
(21) Application number: 12721878.2
(22) Date of filing: 03.04.2012
(51) Int. Cl.: B23B 47/34

(54) **TOOL HOLDER DEVICE**
WERKZEUGHALTEEINRICHTUNG
DISPOSITIF DE RETENUE D'OUTIL

(43) Date of publication of application: 11.02.2015
(73) Proprietor: FUNDACIÓN TECNALIA RESEARCH & INNOVATION, 20009 San Sebastián (Guipúzcoa) (ES)
(72) Inventor: OSTRA BELDARRAIN, Txomin, E-20009 San Sebastian (Guipúzcoa) (ES); RIVERO RASTRERO, Asun, E-20009 San Sebastian (Guipúzcoa) (ES); RODRIGUEZ CANAS, Germán, E-20009 San Sebastian (Guipúzcoa) (ES)
(74) Representative: Stiebe, Lars Magnus
(86) International application number: PCT/ES2012/070227
(87) International publication number: WO 2013/150162

(56) References cited:
- CH-A5- 645 826
- FR-A1- 2 368 336
- SU-A1- 623 658
- US-A- 3 003 372
- US-A- 3 608 334

## Description

### Object of the Invention

The present invention has application in the field of the machining operations of parts, particularly drilling operation, and relates to a tool holder device according to the preamble at claim 1, which can be coupled to a machine or equipment by means of a machined shaft or cone for anchoring.

More specifically, the object proposed by the invention allows producing an axial vibratory movement with respect to the linear movement of the machine and transmitting it to the tool with rotation. An exemplary tool holder is known from FR 2 368 336 A1.

### Background of the Invention

Today, within the scope of machining, drilling and deep drilling processes are highly important machining operations in various sectors of the industry, and even though it is an aging technology, the appearance of new materials, tools, lubricants, machines, controls, etc. open up a very extensive field of study to meet the demands of productivity and environmental legislation of the market.

Current drilling problems are linked to productivity and surface and/or dimensional quality to be obtained.

Typical problems such as the generation of long and wound chips while drilling ductile materials and the appearance of undesired vibrations are examples of phenomena to be improved in the high productivity machining of industrial components, since they involve an increase in down-time, further resulting in losses due to the manufacturing of defective parts and even machine break-downs, therefore eliminating delamination, reducing burrs, decreasing cutting temperature and improving roughness in the drilling of aeronautical materials are goals of great interest for the companies of the sector.

Applying vibrations during manufacturing processes such as machining, welding or forming is a relatively common practice in research and industry for solving the problems related to conventional manufacturing methods.

Within the scope of drilling, applying an axial vibratory movement relative to the linear movement allows reducing the aforementioned problems, since it can reduce the energy needed to perform the operation, increase the productivity, facilitate breaking the chips, extend the life of the tools, increase the surface and internal quality and allow working materials unsuitable for being processed conventionally.

There are inventions today which allow implementing this process, known as vibration assisted drilling.

Said inventions can be classified depending on where can the vibration be applied, first being devices which obtain vibration in the tool without it rotating, secondly being devices which make the part or test piece to be perforated vibrate, and finally there are devices in which the tool rotates and vibrates simultaneously, a group in which the present invention is included.

The last class of tool holder includes document US 6234728 (B1) that comprises a mounting accessory for a drilling tool having a support for coupling to the machine, a tool holder to fix the tool which moves forwards and backwards by means of an axial guiding relative to the support and which rotates integrally together with the tool holder, and that it is made up of suspension means in the axial direction to produce axial vibratory movements in the tool holder resulting from a controlled displacement of the support with respect to the workpiece.

Two factors to be controlled, the frequency and the amplitude, fundamentally intervene in the application of vibrations during drilling. The parameters of the vibration at the tool tip vary depending on the tool, the material and the type of hole to be drilled, so there is the need to be able to modify both the frequency and the amplitude of the vibration.

Said vibration is applied in the axial direction of the tool following a sinusoidal pattern and an amplitude greater than the cutting edge feed, which interrupts the cut. The value of the chip mean thickness increases or decreases by varying the frequency and the amplitude of the cut so it is necessary to be able to modify it depending on the needs of each type of drilling.

Furthermore, in the drilling of some materials such as composite materials, the value of the amplitude of the vibration is an important parameter to be controlled since not very high amplitudes are needed at the outlet of the hole due to possible fibre delamination.

On the other hand, it is very common to perform other operations in drilling operations such as countersinking the holes, for which applying vibrations is not necessary.

The invention with reference US 6234728 (B1) has the problem of said tool holder generates vibrations through contact between the tool and the piece to be drilled so the frequency and vibration parameters are given for each case without the option of modifying said parameters.

Furthermore, in the case of performing any type of operation in which vibrations are not required, such as during countersinking a hole for example, said tool holder would not be appropriate and would have to be changed for another to perform the operation without vibrations.

The present invention is based on the problem of providing a tool holder which is designed for applying low frequency vibrations in which the characteristics of the vibration such as the amplitude can be varied depending on the drilling needs and the possibility of being able to select the vibrations without needing to change the tool holder in operations which do not vibrations at the tool tip.

### Description of the Invention

The present invention relates to a tool holder device which overcomes the drawbacks pointed out above, since it has a body which can be coupled to a machine by means of an anchoring cone and a pneumatic mechanism which allows producing an axial vibratory movement of the tool with respect to the controlled linear movement of the machine and in which it is possible to control the amplitude of the vibrations.

It is also possible to deactivate the state of the vibrations without needing to change tool holder for cases in which working in that state is not appropriate, so the same tool holder device could be used to perform different operations.

The tool holder device can specifically be coupled to a machine which can rotate the tool holder device (with respect to an axial direction of the tool) and comprises securing means for securing a tool. The device comprises a movable part which can move in an axial direction and a pneumatic mechanism, where said pneumatic mechanism can cause an axial vibratory movement of the movable part, and in that the securing means are coupled to the movable part. The axial vibratory movement of the movable part is thus transmitted to the tool.

The pneumatic mechanism comprises a pneumatic piston performing a linear movement in two directions of the axial direction to generate vibrations in a simple manner.

The movable part of the tool holder device comprises a chamber hosting the pneumatic piston such that it can slide axially inside the chamber and conduction means which allow carrying compressed air to the inner conduits traversing the piston and opening into the chamber on axially opposite faces of the pneumatic piston, thus causing its back and forth movement making the piston collides in an alternating manner against the inner walls of the chamber of the movable part, causing a similar back and forth movement of the movable part and, therefore, of the tool anchored to the movable part.

The tool holder device comprises a body comprising an anchoring element which allows coupling the device to the machine and a housing inside which the movable part can move axially. The body comprises a conduit communicating a compressed air supply source of the machine with the conduction means of the movable part. The body therefore performs the functions of securing to the machine where the device is coupled and further hosts the movable part, which performs the functions of anchoring the tool and making the entire device vibrate by means of an axial movement relative to the body.

The tool holder device can comprise a regulator which allows varying the amplitude of the axial movement of the movable part therefore provides the possibility of varying the amplitude of the vibrations adapting them to each case.

The regulator comprises a nut which is coupled on the body closing the housing in a first direction according to the axial direction to act as a stop to the movement of the movable part in the first direction, whereas the body closes the housing in a second direction according to the axial direction and acts as a stop to the movement. The nut can vary its position in the axial direction by varying the axial length of the housing.

The regulator can comprise adjusting means anchoring the nut to the movable part of the device to fix the position of said nut in a simple and integral manner.

The possibility that the device comprises a first shock-absorbing stop housed inside the housing of the body such that the collision impact between the movable part and the body is absorbed is contemplated.

The possibility that the device comprises a second shock-absorbing stop in the regulator to absorb the collision impact of the movable part with the regulator is contemplated.

Finally the possibility that the first and second shock-absorbing stops are fixed to at least two opposite faces of the movable part by means of fixing means, so that the clearance between shock-absorbing stops always refers to the body, thus enabling the optimum variation of the amplitude of the vibration through the regulator is contemplated.

The possibility that the body comprises attachment means attaching the movable part to said body, such that they rotate integrally with the transmitted torque, and the function of vibration with rotation is achieved in the simplest manner possible is contemplated.

The possibility that the pneumatic mechanism comprises return means (for example a spring housed in the chamber of the movable part against which the pneumatic piston can collide), to facilitate the change of direction of the linear movement performed by the piston is contemplated.

The possibility that the device comprises a sealing element between the body and the movable part (so that the clearance existing between the body and the movable part is sealed on at least one of its faces to prevent air intended for activating the pneumatic mechanism from escaping) is contemplated.

The possibility that the device comprises an antifriction element (for example located between the outer face of the movable part and the fixed face of the body) for the axial guiding between the movable part and the body is also contemplated.

The possibility that the body comprises silencing through holes made on its surface (as valves) ejecting the compressed air is further contemplated.

Therefore, according to the described invention, the implant proposed by the invention is an advancement in attachment devices used until now and it solves the problem mentioned above in a fully satisfactorily manner in terms of favouring drilling operations by means of the vibration of the tool, which is performed in a simple manner, with the subsequent improvement of manufacturing processes and the reduction of costs by simplifying the process, all through a simple and integrated design which does not require highly trained operators for the task.

### Description of the Drawings

To complement the description which is being made and for the purpose of aiding to better understand the features of the invention according to a preferred practical embodiment thereof, a set of drawings is attached as an integral part of said description in which the following has been depicted with an illustrative and non-limiting character:
Figure 1 shows a perspective view of the device proposed by the invention.
Figure 2 shows a cross-section view of the device where its components can be seen, where the pneumatic mechanism can be seen in detail with the piston in the upper position.
Figure 3 shows a cross-section view of the device with the piston in the lower position.
Figure 4 shows a plan cross-section view of the device where detail of the pins can be seen.

### Preferred Embodiment of the Invention

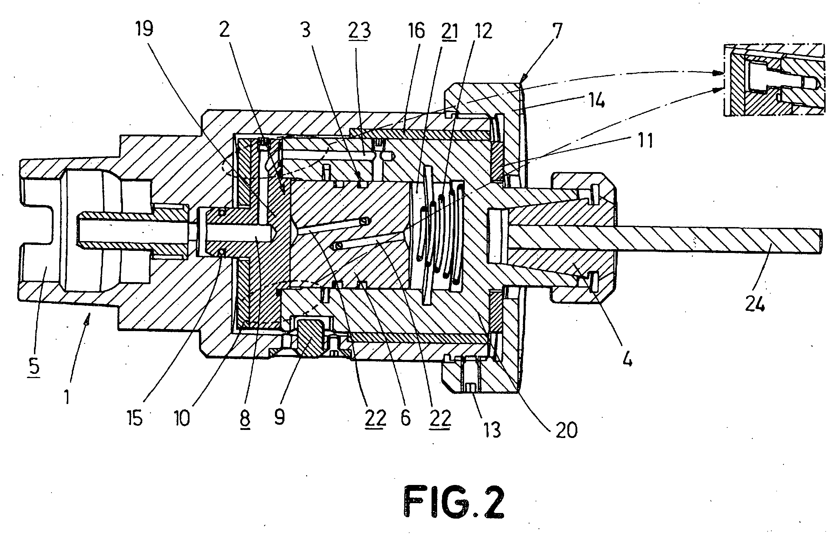

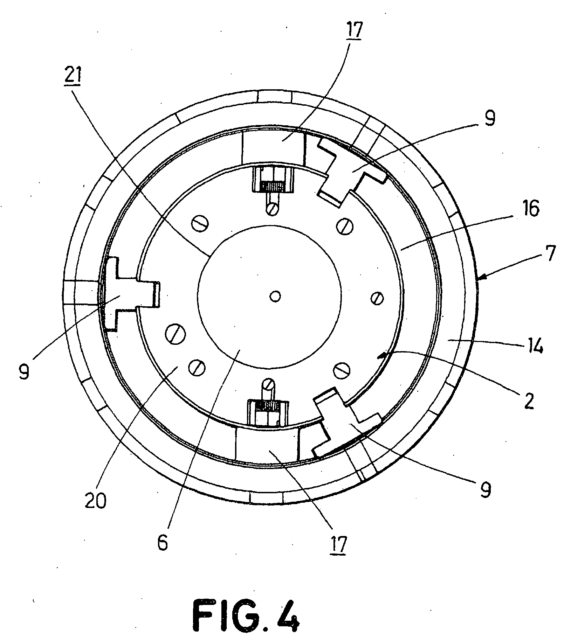

In view of the drawings described, it can be observed how in one of the possible embodiments of the invention a tool holder device comprising a body (1) and a movable part (2), where the movable part (2) comprises securing means (4) for securing the tool (24), preferably an anchoring clamp which secures the tool (24), which is the object of the vibration of the invention, as can be seen in Figures 2, 3 and 4.

The body (1) comprises an anchoring element (5) which is preferably an anchoring cone or a machined shaft for its coupling to a machine, and through which a rotational movement is transmitted to the body (and therefore to the tool) and the compressed air of the machine is transferred to the tool holder device. This compressed air is necessary for the vibratory effect of the tool holder as will be explained below.

The body (1) comprises a housing inside which the movable part (2) can move axially. The movable part (2) which is preferably a chuck shaft is formed by two parts, a first part (19) which has a conduit (8) through which compressed air enters from inside the anchoring cone and a second part (20) to which there are coupled the anchoring means (4) for anchoring the tool (preferably an anchoring clamp).

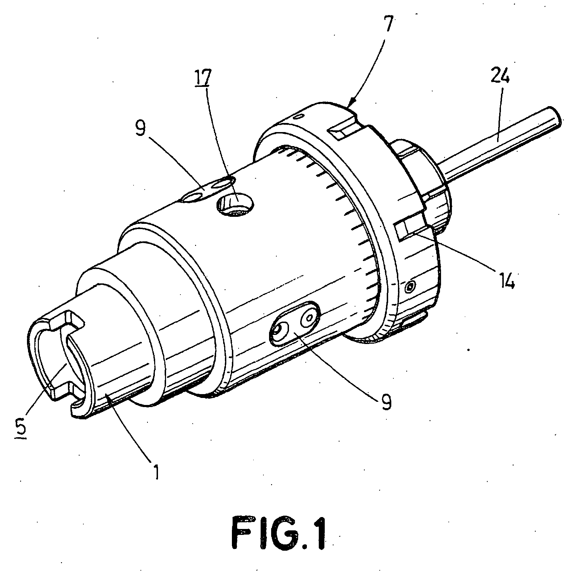

Said first part (19) and second part (20) of the movable part (2) or chuck shaft is preferably fixed by means of tie bolts along the contact area between them, such that the joining of these parts form the movable part (2), as can be seen in Figures 1, 2, 3 and 4.

The movable part (2) comprises a chamber (21) hosting a pneumatic piston (6) which generates the vibratory movement, specifically the second part (20) acts as a sleeve where said pneumatic piston (6) slides in a guided manner.

The pneumatic piston (6) is the element responsible for generating the axial vibratory movement of the tool holder device, and it comprises distribution holes or inner conduits (22) traversing the pneumatic piston (6) opening into the chamber (21) on axially opposite faces of the pneumatic piston (6) and therefore distribute the compressed air in an alternating manner into the chamber (21) to produce the axial vibratory movement of the pneumatic piston (6).

The second part (20) comprises conduction means (23) carrying the compressed air from the conduit (8) of the first part (19) to the distribution holes or inner conduits (22) of the piston (6).

The piston (6) moves by means of the entrance of air through the anchoring cone, where the air is carried through the conduit (8) communicated with the inner conduits (22) traversing the piston (6) which receive the air and are communicated with conduction means (23) receiving the air in an alternating manner, thus allowing the alternating movement of the piston (6).

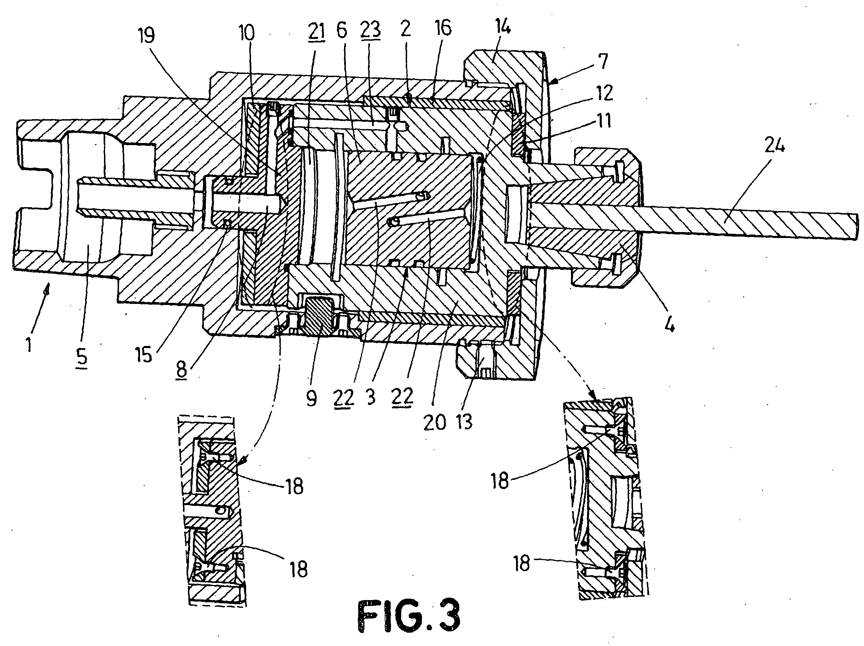

The two end positions of the piston (6) in its movement within the chuck shaft are, on one side, the contact position with the first part (1) and on another, the contact position with the inner face of the second part (20) of the chuck shaft, as can be seen in Figures 2 and 3.

Inside the chamber (21) there is housed a return means (12), which is preferably a spring, aiding the movement of the piston (6), and where the chuck shaft (2) preferably further comprises two holes (17) which are preferably silencing holes, the function of which is to allow the air to exit from the system, as can be seen in Figures 1, 2, 3 and 4.

Antifriction means (16), preferably a bronze bushing, are located in the interface existing between the chuck shaft (2) and the body (1) for guiding the chuck shaft (2), where said bronze bushing is fixed inside the body (1), as can be seen in Figures 2, 3 and 4.

To successfully transfer the rotational movement generated on the body (1) to the tool through the chuck shaft (2), attachment means (9), which are preferably three antirotation pins, were placed so that the movable part (2), preferably the chuck shaft, rotates integrally with the body (1), as can be seen in Figures 1, 2, 3 and 4.

Each antirotation pin is preferably made up of two bolts which are anchored to the body (1) such that both the rotational movement and the axial vibratory movement of the piston (6) are transferred to the tool (24) through the chuck shaft (2).

The tool holder device comprises an axial movement amplitude regulator (7) which is made up of a nut (14) and adjusting means (13) which are preferably studs, it performs the function of fixing the freedom of movement of the chuck shaft (2) inside the body (1), leaving more or less space to perform the vibration with different amplitudes; where the nut (14) acts as a stop to the movement, and the studs are responsible for fixing the nut (14) on the body (1), the space comprised between the chuck shaft (2) and the nut (14) being able to be varied.

The body (1) has preferably an engraved scribing block on its outer surface indicating the amplitude at all times and facilitating the adjustment in the case of modifying the required amplitude by taking the nut (14) as a reference, as can be seen in Figures 1,2,3 and 4.

The type of vibrations of the present invention are considered as low frequency vibrations (between 0 and 5000 Hz) depending on the size of the pneumatic actuator, the tool used, the material to be drilled, etc., the amplitude of the vibrations being able to be regulated, as has been indicated above, by means of the axial movement amplitude regulator (7), adapting the device to the needs of the process itself.

On the other hand, a first shock-absorbing stop (10) and a second shock-absorbing stop (11), which are preferably rubber stops, are arranged inside the body (1) for minimizing the collision impact between the movable part (2) and the body (1), for which a rubber stop is anchored to the first part (19) of the movable part (2) by fixing means (18), which are preferably two bolts, and another rubber stop is anchored to the second part (20) of the movable part (2) preferably by another two bolts.

The two rubber stops move integrally with the movable part (2), where said movable part (2) abuts, on one side, with the inner face of the body, and on another side, with the inner face of the amplitude regulator (7), which is that which fixes the clearance between the rubber stop and the amplitude regulator (7).

In turn, between the anchoring cone and the individual part with the air inlet, there is a sealing element (15), which is preferably a ring joint acting as an air-lock, such that it guides the entry of air to the pneumatic mechanism (3), as can be seen in Figures 2, 3 and 4.

Overall, by means of the explanation described herein, a tool holder device which can be coupled to a machine, in which a drilling tool is anchored and which allows obtaining vibratory movements of the latter as it moves forward is made possible through a pneumatic mechanism, where the air enters through coupling to the machine or equipment and causes the movement of a piston which is responsible for providing the tool with an axial vibratory movement with respect to the controlled linear movement of the support, as can be seen in view of Figures 1, 2 and 3.

## Claims

1. Tool holder device which can be coupled to a machine which can rotate the device, the device comprising securing means (4) for securing a tool (24) and a body (1) which comprises an anchoring element (5) which allows coupling the device to the machine, wherein it comprises a movable part (2) which can move in an axial direction, **characterized in that** said securing means (4) are coupled to the movable part (2), wherein said movable part (2) comprises a chamber (21) hosting a pneumatic mechanism (3) which comprises a pneumatic piston (6) performing a linear movement in at least two directions, such that it can slide axially inside the chamber (21), wherein said pneumatic mechanism (3) can cause an axial vibratory movement of the movable part (2),
wherein the movable part (2) further comprises conduit means (8, 23) configured for supplying compressed air to said pneumatic mechanism (3) through said anchoring element (5) and wherein the pneumatic piston (6) further comprises inner conduits (22), said compressed air being carried to said inner conduits (22) traversing the piston (6) and opening into the chamber (21) on axially opposite faces of the pneumatic mechanism (3), thus producing the axial vibratory movement of the pneumatic piston (6).

2. Tool holder device according to claim 1, comprising a regulator (7) which allows varying the amplitude of the axial movement of the movable part (2).

3. Tool holder device according to claim 2, wherein the regulator (7) comprises a nut (14) which is coupled on the body (1) closing the housing in a first direction according to the axial direction to act as a stop to the movement of the movable part (2) in the first direction, whereas the body (1) closes the housing in a second direction according to the axial direction and acts as a stop of the movement and in that the nut (14) can vary its position in the axial direction by varying the axial length of the housing.

4. Tool holder device according to any of claims 2 or 3, wherein the regulator (7) comprising adjusting means (13) anchoring the nut (14) to the movable part (2) of the device to fix the position of said nut (14).

5. Tool holder device according to any of the preceding claims, comprising a first shock-absorbing stop (10) housed inside the housing to absorb the collision impact of the movable part (2) with the body (1).

6. Tool holder device according to any of claims 2 to 5, comprising a second shock-absorbing stop (11) in the regulator to absorb the collision impact of the movable part (2) with the regulator (7).

7. Tool holder device according to any of the preceding claims, comprising attachment means (9) for attaching the movable part (2) to the body (1).

8. Tool holder device according to any of the preceding claims, wherein the pneumatic mechanism (3) comprises return means (12).

9. Tool holder device according to any of the preceding claims, comprising a sealing element (15) between the body (1) and the movable part (2).

10. Tool holder device according to any of the preceding claims, comprising an antifriction element (16) for the axial guiding between the movable part (2) and the body (1).

11. Tool holder device according to any of the preceding claims, wherein the fixed part (1) has silencing through holes (17) made on its surface which allow air to exit the device.

## Patentansprüche

1. Werkzeughalteeinrichtung, die an eine Maschine, die die Einrichtung drehen kann, koppelbar ist, wobei die Einrichtung Befestigtmgsmittel (4) zum Befestigen eines Werkzeugs (24) und einen Körper (1), der ein Verankerungselement (5) umfasst, das das Koppeln der Einrichtung an die Maschine ermöglicht, umfasst, wobei sie ein bewegliches Teil (2) umfasst, das sich in eine axiale Richtung bewegen kann, **dadurch gekennzeichnet, dass** die Befestigungsmittel (4) an das bewegliche Teil (2) gekoppelt sind, wobei das bewegliche Teil (2) eine Kammer (21) umfasst, die einen pneumatischen Mechanismus (3) beherbergt, der einen pneumatischen Kolben (6) umfasst, der eine Linearbewegung in mindestens zwei Richtungen derart ausführt, dass er im Inneren der Kammer (21) axial gleiten kann, wobei der pneumatische Mechanismus (3) eine axiale Vibrationsbewegung des beweglichen Teils (2) bewirken kann,
wobei das bewegliche Teil (2) ferner Röhrenmittel (8, 23) umfasst, die für die Lieferung von Druckluft an den pneumatischen Mechanismus (3) durch das Verankerungselement (5) hindurch konfiguriert sind, und wobei der pneumatische Kolben (6) ferner innere Röhren (22) umfasst, wobei die Druckluft zu den inneren Röhren (22) befördert wird, die den Kolben (6) durchqueren und an axial entgegengesetzten Flächen des pneumatischen Mechanismus (3) in die Kammer (21) munden, wodurch sie die axiale Vibrationsbewegung des pneumatischen Kolbens (6) erzeugen.

2. Werkzeighalteeinrichtung nach Anspruch 1, umfassend ein Regelgerät (7), das das Variieren der Amplitude der axialen Bewegung des beweglichen Teils (2) ermöglicht.

3. Werkzeughalteeinrichtung nach Anspruch 2, wobei das Regelgerät (7) eine an den Körper (1) gekoppelte Mutter (14) umfasst, die das Gehäuse in einer ersten Richtung gemäß der axialen Richtung schließt, um als Anschlag für die Bewegung des beweglichen Teils (2) in die erste Richtung zu wirken, wohingegen der Körper (I) das Gehäuse in einer zweiten Richtung gemäß der axialen Richtung schließt und als Anschlag der Bewegung wirkt, und dass die Mutter (14) ihre Position in der axialen Richtung durch Variieren der axialen Länge des Gehäuses variieren kann.

4. Werkzetlghalteeinrichtung nach einem der Anspruch 2 oder 3, wobei das Regelgerät (7) Einstellmittel (13) umfasst, die die Mutter (14) an dem beweglichen Teil (2) der Einrichtung verankert, um die Position der Mutter (14) zu fixieren.

5. Werkzeughalteeinrichtung nach einem der vorangehenden Ansprüche, umfassend einen ersten stoßdämpfenden Anschlag (10), der im Inneren des Gehäuses untergebracht ist, um den Kollisionsaufprall des beweglichen Teils (2) auf den Körper (1) zu absorbieren.

6. Werkzeughalteeinrichtung nach einem der Ansprüche 2 bis 5, umfassend einen zweiten stoßdämpfenden Anschlag (11) im Regelgerät zum Absorbieren des Kollisionsaufpralls des beweglichen Teils (2) auf das Regelgerät (7).

7. Werkzeughalteeinrichtung nach einem der vorangehenden Ansprüche, umfassend Befestigungsmittel (9) zum Befestigen des beweglichen Teils (2) an dem Körper (1).

8. Werkzeughalteeinrichtung nach einem der vorangehenden Ansprüche, wobei der pneumatische Mechanismus (3) Rückholmittel (12) umfasst.

9. Werkzeughalteeinrichtung nach einem der vorangehenden Ansprüche, umfassend ein Dichtungselement (15) zwischen dem Körper (1) und dem beweglichen Teil (2).

10. Werkzeughalteeinrichtung nach einem der vorangehenden Ansprüche, umfassend ein reibungsminderndes Element (16) für die axiale Führung zwischen dem beweglichen Teil (2) und dem Körper (1).

11. Werkzeughalteeinrichtung nach einem der vorangehenden Ansprüche, wobei das feststehende Teil (1) geräuschdämpfende Durchgangslöcher (17) auf seiner Oberfläche hat, die das Entweichen von Luft aus der Einrichtung ermöglichen.

## Revendications

1. Dispositif porte-outil qui peut être couplé à une machine pouvant faire tourner le dispositif, le dispositif comprenant des moyens de fixation (4) pour fixer un outil (24) et un corps (1) comprenant un élément d'ancrage (5) permettant le couplage du dispositif à la machine, lequel dispositif porte-outil comprend une partie mobile (2) qui peut se déplacer dans une direction axiale, **caractérisé en ce que** lesdits moyens de fixation (4) sont couplés à la partie mobile (2), ladite partie mobile (2) comprenant une chambre (21) contenant un mécanisme pneumatique (3) qui comprend un piston pneumatique (6) effectuant un mouvement linéaire dans au moins deux directions de telle sorte qu'il peut coulisser axialement à l'intérieur de la chambre (21), lequel mécanisme pneumatique (3) peut induire un mouvement vibratoire axial de la partie mobile (2),
dans lequel dispositif porte-outil, la partie mobile (2) comprend en outre des moyens de conduction (8, 23) configurés pour alimenter en gaz comprimé ledit mécanisme pneumatique (3) à travers ledit élément d'ancrage (5) et dans lequel le piston pneumatique (6) comprend en outre des conduits internes (22), l'air comprimé étant amené auxdits conduits internes (22) qui traversent le piston (6) et s'ouvrent dans la chambre (21) sur des faces axialement opposées du mécanisme pneumatique (3) en produisant ainsi le mouvement vibratoire axial du piston pneumatique (6).

2. Dispositif porte-outil selon la revendication 1, comprenant un régulateur (7) qui permet de faire varier l'amplitude du mouvement axial de la partie mobile (2).

3. Dispositif porte-outil selon la revendication 2, dans lequel le régulateur (7) comprend un écrou (14) couplé au corps (1) en fermant le boîtier dans une première direction selon la direction axiale en vue d'agir comme une butée pour le mouvement de la partie mobile (2) dans la première direction, tandis que le corps (1) ferme le boîtier dans une deuxième direction selon la direction axiale et agit comme une butée pour le mouvement, et en ce que la position de l'écrou (14) peut varier dans la direction axiale en faisant varier la longueur axiale du boîtier.

4. Dispositif porte-outil selon l'une des revendications 2 ou 3, dans lequel le régulateur (7) comprend des moyens d'ajustage (13) qui ancrent l'écrou (14) à la partie mobile (2) du dispositif en vue de fixer la position dudit écrou (14).

5. Dispositif porte-outil selon l'une quelconque des revendications précédentes, lequel comprend une première butée d'absorption des chocs (10) logée à l'intérieur du boîtier en vue d'absorber l'impact de collision de la partie mobile (2) sur le corps (1).

6. Dispositif porte-outil selon l'une quelconque des revendications 2 à 5, lequel comprend une deuxième butée d'absorption des chocs (11) dans le régulateur en vue d'absorber l'impact de collision de la partie mobile (2) sur le régulateur (7).

7. Dispositif porte-outil selon l'une quelconque des revendications précédentes, lequel comprend des moyens d'attache (9) pour attacher la partie mobile (2) au corps (1).

8. Dispositif porte-outil selon l'une quelconque des revendications précédentes, dans lequel le mécanisme pneumatique (3) comprend des moyens de rappel (12).

9. Dispositif porte-outil selon l'une quelconque des revendications précédentes, lequel comprend un élément d'étanchéité (15) situé entre le corps (1) et la partie mobile (2).

10. Dispositif porte-outil selon l'une quelconque des revendications précédentes, lequel comprend un élément antifriction (16) pour le guidage axial entre la partie mobile (2) et le corps (1).

11. Dispositif porte-outil selon l'une quelconque des revendications précédentes, dans lequel la partie fixe (1) a un amortissement de bruits à travers des trous (17) réalisés sur sa surface et qui permettent à l'air de sortir du dispositif.
